# EUROPEAN PATENT SPECIFICATION

(11) **EP 1 514 900 B1**
(45) Date of publication and mention of the grant of the patent: **05.12.2007**
(21) Application number: 04104191.4
(22) Date of filing: 01.09.2004
(51) Int. Cl.: C08L 9/00

(54) **Farm tire with tread of rubber composition containing starch/plasticizer composite**
Landwirtschaftlicher Reifen mit einer Lauffläche aus einer Stärke/Weichmacher-Komposit enthaltenden Kautschukzusammensetzung
Pneu pour materiel agricole ayant une bande de roulement à base d'une composition de caoutchouc contenant un matériau composite amidon/plastifiant

(30) Priority: 12.09.2003 US 502805 P
(43) Date of publication of application: 16.03.2005
(73) Proprietor: THE GOODYEAR TIRE & RUBBER COMPANY, Akron, Ohio 44316-0001 (US)
(72) Inventor: Lechtenboehmer, Annette, 9048 Ettelbruck (LU); Corvasce, Filomeno Gennaro, 9170 Mertzig (LU); Bernard, Carlo, 7590 Beringen (LU)
(74) Representative: Kutsch, Bernd

(56) References cited:
- EP-A- 0 795 581
- EP-A- 0 992 536
- EP-A- 0 995 775
- EP-A- 1 074 582
- EP-A- 1 293 530
- EP-A- 1 302 337
- EP-A- 1 312 639
- WO-A-99/47368
- US-B1- 6 273 163

## Description

### Field of the Invention

This invention relates to a farm tire, and more specifically to a farm tractor drive tire, according to claim 1.

### Background of the Invention

Farm tractor drive tires are tires intended for farm service having treads intended to be soil engaging which are configured with significantly spaced apart lug projections so that the tread of the tire of the driven tractor wheel may act somewhat as a gear to engage the soil and thereby propel the tractor itself across the ground.

Such farm tire treads because of their widely spaced apart raised ground engaging lugs have a ratio of net running surface of the tread lugs to the tread's gross dimensions (net to gross ratio expressed in terms of percentage of the running surface of the lugs) in a range of only from 15 percent to 22 percent as compared to more conventional passenger tires which may have an net to gross ratio more in a range of from 50 to 85 percent because it is normally desired for the passenger tires to present a significantly greater running surface to the road and thereby a smoother ride for the vehicle itself.

It can be readily recognized that significant demands are normally placed on the rubber composition of the tire treads for such farm tractor driven tires.

For example, such farm tractor driven tires may be expected to be able to propel the tractor across a field amidst significantly uneven ground and crop stubble. Accordingly, such tire treads with the significantly spaced apart tread lugs may be expected to aid engaging the soil for propelling the tractor itself as well as resisting mud and dirt from excessively clinging to the recessed portion of the tread surface between the raised lugs as would be a problem if the tread where to be provided with lugs in close proximity to each other and therefore with a relatively narrow groove configuration such as for example passenger tire treads.

A measure of such farm tractor driven tire tread configuration is its aforesaid net-to-gross ratio where the gross is the overall tread footprint, including the intermediate region between the lugs and where the net represents that running surface of the outer surface of the lugs themselves.

Therefore, significant considerations for such a tire intended for farm service as a farm tractor driven tire include adequate abrasion resistance for both the running surface of the spaced apart tread lugs as well as the significantly exposed intermediate surface between the tread lugs. Because the population of the running surface of the tread lugs itself is relatively small, the individual tread lugs must be of a rubber composition having significant physical properties such as, for example, stiffness, crack resistance, tear resistance, a high elongation, a relatively low modulus at large elongations and good aging resistance.

For this invention, a rubber composition is provided for such farm tire tread of a conjugated diene-based rubber composition which contains a particulate reinforcement as a combination of a pre-formed starch/plasticizer complex composite of a starch particle core complexed with an optimally minimized plasticizer and where the composite of starch/plasticizer complex is further reacted with an optimally minimized organosilane polysulfide in situ within the conjugated diene-based elastomer host.

The rubber composition additionally contains rubber reinforcing carbon black together with a coupling agent for the starch/plasticizer complex composite. It may, optionally, also contain aggregates of precipitated silica reinforcement. The philosophy is to provide such farm tire tread configuration with a sulfur cured rubber composition which has enhanced physical properties in which the optimized starch/plasticizer complex composite provides a significant contribution.

Historically, starch has sometimes been suggested for use in elastomer formulations for various purposes in a form of a starch/plasticizer composite. Such starch/plasticizer composite is used in conjunction with carbon black reinforcing filler.

US-A- 5,672,639 relates to rubber composition containing a starch/plasticizer composite as a tread for a tire where the plasticizer can be, for example, a poly(ethylenevinyl alcohol) and/or cellulose acetate. The ratio of starch to plasticizer can be, for example, from 1/1 to 2/1.

US-A- 6,273,163 and 6,458,871 relate to preparation of a rubber composition containing a starch/plasticizer composite reinforcement together with at least one additional reinforcing filler (e.g. carbon black and/or silica) in which a first organosilane polysulfide is blended in an initial non-productive mixing stage and a second organosilane polysulfide is blended in a subsequent productive mixing stage.

The term "phr" where used herein, and according to conventional practice, refers to "parts of a respective material per 100 parts by weight of rubber, or elastomer".

In the description of this invention, the terms "rubber" and "elastomer" if used herein, may be used interchangeably, unless otherwise prescribed.

The term "silica" as used herein relates to synthetic amorphous silica, particularly aggregates thereof, such as, for example precipitated silica and fumed silica and particularly precipitated silica.

A reference to an elastomer's Tg refers to its glass transition temperature, which can conveniently be determined by a differential scanning calorimeter at a heating rate of 10°C per minute.

### Summary and Practice of the Invention

In accordance with this invention, a farm tire, preferably a farm tractor driven tire, is provided with a circumferential tread configuration comprised of spaced apart raised lugs primarily in a form of elongated bars extending substantially diagonally across at least a portion of the tread with an average lug outer running surface width to lug length of a ratio of from 1/10 to 1/3, average individual lug radial heights greater than the associated individual lug running surface, wherein said tread has a net-to-gross value in a range of from 15 to 22, alternately from 16 to 20, percent and wherein said tread is of a rubber composition comprised of, based upon parts by weight per 100 parts by weight rubber (phr):
(A) 100 parts by weight of at least one conjugated diene-based elastomer,
(B) 25 to 120, alternatively 25 to 90, phr of at least one elastomer reinforcing filler composed of
   (1) 25 to 120, alternatively 25 to 90, phr of a starch/plasticizer composite, or
   (2) 1 to 20, alternatively 5 to 10, phr of starch/synthetic plasticizer composite, and, correspondingly 5 to 119, alternately 15 to 85, phr of rubber reinforcing carbon black;
   wherein said starch has a softening point according to ASTM No. D1228 in a range of 180°C to 220°C and wherein said starch/plasticizer composite has a softening point in a range of 110°C to 170°C according to ASTM No. D1228, and has a plasticizer/starch weight ratio in a range of from 0.1/1 to 0.6/1, alternately from 0.25/1 to 0.4/1; and
(C) optionally a coupling agent for said starch/plasticizer composite,
wherein said coupling agent has a moiety reactive with hydroxyl groups contained on said starch/plasticizer composite and another moiety interactive with said diene-based elastomer.

Subclaims relate to preferred embodiments of the invention.

Said coupling agent may be, for example, a bis(triethoxysilylpropyl) polysulfide having an average of from 2 to 4, usually preferably an average in a range of from 2 to 2.6, connecting sulfur atoms in its polysulfidic bridge in a weight ratio of said coupling agent to said plasticizer /starch composite in a range of from 0.05/1 to 0.3/1.

Alternately, said coupling agent may be used which has an alkoxysilane moiety for reaction with hydroxyl groups on the starch/plasticizer composite and hydroxyl groups on silica (e.g. silanol groups) if silica is used, and a mercapto functionality, or moiety, for interaction with the diene-based elastomer(s). Representative of such coupling agent is, for example, an organomercapto alkoxysilane such as for example, mercaptopropyl triethoxysilane. Alternately, such coupling agents with a mercapto functionality, or moiety, may be used in which the mercapto functionality, or moiety, has been blocked by a moiety which is itself labile and in which the blocked mercapto functionality is then deblocked under the rubber vulcanization conditions of elevated temperature to provide the rubber reactive mercapto functionality. Thus an appropriate organomercapto alkoxysilane such as, for example, mercaptopropyl triethoxysilane, with its mercapto group blocked by such a moiety (organomercapto trialkylsilane, or mercaptopropyl triethoxysilane having a blocked mercapto moiety with a moiety which capable of being deblocked at an elevated temperature) may be used for which its mercapto moiety is then deblocked during vulcanization of the associated rubber composition at an elevated temperature such as, for example, a temperature in a range of from 140°C to 160°C. For example, see US-A- 6,127,468, 6,204,339, 6,414,061, 6,528,673 and 6,608,125.

Optionally, said rubber composition for said farm tractor driven tire tread additionally contains from 2 to 20, alternately 2 to 5, phr of at least one additional reinforcing filler and/or non-reinforcing filler selected from at least one of vulcanized rubber particles, short fibers, kaolin clay, mica, talc, titanium dioxide and limestone.

Optionally, said rubber composition for said farm tractor driven tire tread contains short fibers in an amount of from 2 to 5 phr and are selected from fibers of at least one of nylon, aramid, polyester and cellulose material.

A significant aspect of the rubber composition for said farm tractor driven tire tread is the use of a cooperative combination of:
(A) said particulate starch/plasticizer composite wherein the weight ratio of plasticizer to starch is a relatively low weight ratio in a range of from 0.1/1 to 0.6/1, and
(B) said bis(3-triethoxysilylpropyl) polysulfide in a ratio thereof to said starch/plasticizer composite is a relatively low weight ratio in a range of 0.1/1 to 0.5/1 or said organomercapto alkoxysilane having a blocked mercapto moiety which is capable of being unblocked, or deblocked, by heating to a temperature in a range of 140°C to 160°C.

As hereinafter discussed, preferably, the plasticizer is comprised primarily of poly(ethylenevinyl alcohol), although it may contain additional or be other plasticizers. The poly(ethylenevinyl alcohol) may have a molecular weight (number average), for example, in a range of from 11,000 to 60,000. It may conventionally have, for example, a vinylalcohol/ethylene mole ratio of 60/40 although it is expected that such ratio may vary somewhat.

This combination of the limited relatively low ratio of plasticizer to starch in said starch/plasticizer together with the limited ratio of said coupling agent to said starch/plasticizer composite is considered herein to be significant for the rubber composition of the farm tractor drive tire tread of this invention with its significantly spaced apart lugs because it provides an ability to tune the stress/strain curve, namely the rubber stiffness, in order for the rubber composition of the spaced apart individual tread lugs to be relatively stiff at low elongations as indicated by a relatively high Shore A hardness at low elongations, yet have relatively low moduli values at relatively high elongations.

A further significant aspect of the invention is the farm tractor driven tire tread configuration composed of spaced apart lugs and having a net to gross ratio in a range of 15 to 22 percent in combination with the prescribed starch/plasticizer-containing rubber composition.

This is significant to present the tread in a form of a farm tractor driven tire intended to be soil engaging to aid in propelling the tractor across the field of soil and possibly crop stubble somewhat in the nature of a rubber soil-engaging gear and to thereby differentiate such tread from a more conventional automobile tire tread. It is therefore important to appreciate that only a relatively few tread lugs normally contact the ground at any time, the these lugs may meet uneven ground, stones and/or crop stubble, and that therefore the individual lugs need to be capable of experiencing local relatively high, short term, elongations and the lugs should be capable of resisting tearing, cracking and penetration of foreign objects.

Thus, in a preferred embodiment of the invention, the farm tire is a farm tractor drive tire with a tread having a running surface of significantly spaced apart lugs designed to be soil engaging of a rubber composition comprised of at least one conjugated diene-based elastomer which contains an organosilane polysulfide in situ coupled dispersion of reinforcing filler as a pre-formed starch/plasticizer complexed composite. The running surface of the farm drive tire tread itself is of a configuration comprised of widely spaced apart raised lugs to provide a ratio of net running surface of the tread lugs to the tread's gross dimensions (net to gross ratio expressed in terms of percentage of the running surface of the lugs) in a range of from 15 percent to 20 percent. Therefore, operationally in the field, normally few lugs actually touch, or engage, the ground at any one time. Accordingly, such individual tread lugs are desirably capable of experiencing locally high loads and should be sufficiently stiff to resist extensive elongations.

It is also significant to present the challenges of the rubber composition of the farm tractor drive tire tread with its significantly spaced apart lugs to have a suitable modulus profile of sufficient stiffness (Shore A hardness) at moderate elongations and relatively low stiffness (e.g. the corresponding modulus value) at high elongations (e.g. the tensile value at ultimate elongation), in combination with good tear and crack resistance, and good aging resistance.

Accordingly, the use of a combination of a pre-formed starch/plasticizer composite of the prescribed ratio of plasticizer to starch is a significant aspect of the invention for the farm tractor drive tire tread together with a reaction with an organosilane of an organosilane polysulfide in situ within the elastomer host. In practice, use of a plasticizer, particularly a minimalization of the plasticizer, able to react with organosilane moiety of the organosilane polysulfide presents several advantages. The plasticizer is seen herein to enable a better separation of individual starch particles by complexation mechanisms with the amylose molecule on the outside of the starch particle. The organosilane moiety of the organosilane polysulfide is used to react with the hydroxyl groups contained in the plasticizer to thereby link the hydroxyl groups on the outside part of the plasticizer to the elastomer in situ within the elastomer host. This is seen herein to create a core shell of plasticizer around the hard starch particles. This mechanism can be advantageously used to tune the reinforcing capabilities of the starch based filler whereby the content of the plasticizer can be adjusted with the starch content to achieve a lower starch/plasticizer ratio and thereby a lower interaction of amylose groups on the starch with the plasticizer. This is seen herein to result in an ability to create core shells around the starch particles to form plasticizer/starch composites which can promote a range of stiffness (e.g. a range of moduli to correspond to different elongations) for the rubber host which contains such composite. As a consequence, it is seen herein that the stress strain profile of interest for the rubber composition for the farm tractor driven tread application can be achieved (the aforesaid low stiffness at high elongations to promote improved tear resistance, sufficient stiffness at moderate elongation (as represented by Shore A hardness) to promote reduced tread block mobility, which can also promote reduced penetration of foreign objects (e.g. crop stubble), and to promote better handling of the tractor tire on road and better soil engagement for various types of soils).

The tread block mobility factor is envisioned in a sense of mobility of tread blocks, or lugs, of the farm tire tread. In this sense, it is desired that a tread block, or lug, has sufficient stiffness to promote suitable tire handling, namely tire tread mobility, and that such stiffness is also considered herein to be helpful, upon contact of a lug with crop stubble, to promote the bending of crop stubble, or stalks, away from a respective lug, which is also in a sense of stubble resistance of a respective lug. However, if crop stubble (e.g. crop stalks) should be positioned in a manner that it doesn't easily bend away from a lug, then the lug should have a good tear resistance property which is another form of crop stubble resistance.

It is considered herein that the required starch/plasticizer composite for this invention with plasticizer/starch ratios in the range of 0.1/1 to 0.6.1 as previously described satisfactorily fulfills these objectives when used with the minimum amount of organosilane of an organosilane polysulfide in the rubber composition with the starch/plasticizer composite based filler dispersion, namely a weight ratio of the organosilane polysulfide to starch/plasticizer composite in a range of 0.05/1 to 0.3/1.

The moiety of the coupler reactive with the starch/plasticizer composite surfaces, namely the organosilane of the organosilane polysulfide, is generally considered herein as being capable of reacting with at least one or more hydroxyl groups on the surface of the pre-formed particulate starch/plasticizer composite and possibly with other reactive groups thereon.

In the practice of this invention, the starch/plasticizer composite may be desired to be used, for example, as a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

For the purposes of this invention, the plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what is considered or believed herein to be relatively strong chemical and/or physical interactions between the starch and the plasticizer.

In general, the plasticizer /starch composite may have a plasticizer to starch weight ratio in a range of 0.1/1 to 0.6/1, so long as the plasticizer/starch composition has the required softening point range, and preferably, is capable of being a free flowing, dry powder or extruded pellets, before it is mixed with the elastomer(s).

While the synthetic plasticizer(s) may have a viscous nature at room temperature, or at 23°C and, thus, considered to be a liquid for the purposes of this description, although the plasticizer may actually be a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is comprised of at least one of poly(ethylenevinyl alcohol) and cellulose acetate and more preferably the plasticizer is comprised primarily poly(ethylenevinyl alcohol.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (for example in a 60/40 mole ratio) copolymers can be obtained in powder forms at different molecular weights and crystallinities such as, for example, a molecular weight of about 11700 with an average particle size of about 11.5 microns or a molecular weight (weight average) of about 60,000 with an average particle diameter of less than 50 microns.

Various blends of starch and ethylenevinyl alcohol copolymers, namely the poly(ethylenevinyl alcohol), can then be prepared according to mixing procedures well known to those having skill in such art. For example, a procedure might be utilized according to a recitation in the patent publication by Bastioli, Bellotti and Del Trediu entitled A Polymer Composition Including Destructured Starch An Ethylene Copolymer, US-A- 5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an esterification condensation reaction. Such esterification reactions are well known to those skilled in such art.

In the practice of this invention, the aforesaid inorganic fillers may be, for example, selected from one or more of kaolin clay, talc, short discrete fibers, thermoplastic powders such as polyethylene and polypropylene particles, or other reinforcing or non-reinforcing inorganic fillers.

Such additional inorganic fillers are intended to be exclusive of, or to not include, pigments conventionally used in the compounding, or preparation of, rubber compositions such as zinc oxide and titanium oxide.

Such additional short fibers may be, for example, of organic polymeric materials such as cellulose, aramid, nylon and polyester.

In practice, the said starch/synthetic plasticizer composite may have a moisture content in a range of zero to 30, alternatively one to six, weight percent.

In practice, the starch/plasticizer composite may be used as a partial replacement for carbon black reinforcement, depending somewhat upon the properties desired for the cured, or vulcanized tread rubber composition.

In practice, it is generally preferred that the rubber reinforcing carbon black is used in conjunction with the starch composite in an amount of at least 5 and preferably at least 35 phr of carbon black, depending somewhat upon the structure of the carbon black. Carbon black structure is often represented by its DBP (dibutylphthalate) value. Reinforcing carbon blacks typically have a DBP number in a range of 40 to 400 cc/100 gm, and more usually in a range of 80 to 300 (ASTM D 1265). If the carbon black content is used with a view to providing an elastomer composition with a suitable electrical conductivity to retard or prevent appreciable static electricity build up, a minimum amount of carbon black in the elastomer composition might be, for example, 10 phr if a highly electrically conductive carbon black is used, otherwise usually at least 25 and often at least 35 phr of carbon black is used.

If desired, and on a practical basis, it is usually preferred that the coupling agent for the starch/plasticizer composite can be the same coupler as could be used for silica reinforcement, if silica reinforcement is used. Thus, it is considered herein that the moiety of the coupler reactive with the surface of the starch/plasticizer composite is also reactive with the hydroxyl (e.g. SiOH) groups, and/other reactive groups, typically on the surface of the silica. Such silica, if used, is for example, a synthetic precipitated silica.

It is important to appreciate that the starch composite could be used as a total replacement for carbon black, namely in place of carbon black, for the tractor tread rubber composition. However, it is considered herein that the starch composite is to be typically used in combination with carbon black usually as a partial replacement for carbon black, for the sulfur vulcanizable tractor tread rubber composition.

It is important to appreciate that, while the starch may be used in combination with the starch/plasticizer composite, they are not considered herein as equal alternatives. Thus, while starch might sometimes be considered suitable as a reinforcement for the elastomer composition together with the coupling agent, the starch/plasticizer composite itself may be considered more desirable for some applications, even when used without a coupling agent.

If silica is used as a reinforcement together with carbon black, the weight ratio of silica to carbon black is desirably in a weight ratio in a range of 0.1/1 to 10/1, thus at least 0.1/1, alternatively at least 0.9/1, optionally at least 3/1 and sometimes at least 10/1.

The weight ratio of said silica coupling agent to the starch/plasticizer composite and silica, if silica is used, may, for example, be in a range of 0.01/1 to 0.2/1 or even up to 0.4/1, so long as the weight ratio of the organosilane polysulfide to starch/plasticizer composite is in the aforesaid range of from 0.05/1 to 0.3/1, and alternately in a range of from 0.11/1 to 0.23/1.

The starch is recited as being composed of amylose units and/or amylopectin units. Typically, the starch is composed of a combination of the amylose and amylopectin units in a ratio of 25/75. A somewhat broader range of ratios of amylose to amylopectin units is recited herein in order to provide a starch for the starch composite which interact with the plasticizer somewhat differently. For example, it is considered herein that suitable ratios may be from 20/80 up to 100/0, although a more suitable range is considered to be 15/85 to 35/63.

The starch can typically be obtained from naturally occurring plants, as hereinbefore referenced. The starch/plasticizer composition can be present in various particulate forms such as, for example, fibrils, spheres or macromolecules, which may, in one aspect, depend somewhat upon the ratio of amylose to amylopectin in the starch as well as the plasticizer content in the composite.

The relative importance of such forms of the starch is the difference in their reinforcing associated with the filler morphology. The morphology of the filler primarily determines the final shape of the starch composite within the elastomer composition, in addition, the severity of the mixing conditions such as high shear and elevated temperature can allow to optimize the final filler morphology. Thus, the starch composite, after mixing, may be in a shape of one or more of hereinbefore described forms.

It is important to appreciate that the starch, by itself, is hydrophilic in nature, meaning that it has a strong tendency to bind or absorb water. Thus, the moisture content for the starch and/or starch composite has been previously discussed herein. This is considered to be an important, or desirable, feature in the practice of this invention because water can also act somewhat as a plasticizer with the starch and which can sometimes associate with the plasticizer itself for the starch composite such as polyvinyl alcohol and cellulose acetate, or other plasticizer which contain similar functionalities such as esters of polyvinyl alcohol and/or cellulose acetate or any plasticizer which can depress the melting point of the starch.

Various grades of the starch/plasticizer composition can be developed to be used with various elastomer compositions and processing conditions.

As hereinbefore pointed out, the starch typically has a softening point in a range of 180°C to 220°C, depending somewhat upon its ratio of amylose to amylopectin units, as well as other factors and, thus, does not readily soften when the rubber is conventionally mixed, for example, at a temperature in a range of 140°C to 165°C. Accordingly, after the rubber is mixed, the starch remains in a solid particulate form, although it may become somewhat elongated under the higher shear forces generated while the rubber is being mixed with its compounding ingredients. Thus, the starch remains largely incompatible with the rubber and is typically present in the rubber composition in individual domains.

However, it is now considered herein that providing starch in a form of a starch composite of starch and a plasticizer is particularly beneficial in providing such a composition with a softening point in a range of 110°C to 160°C.

The plasticizers can typically be combined with the starch such as, for example, by appropriate physical mixing processes, particularly mixing processes that provide adequate shear force.

The combination of starch and, for example, polyvinyl alcohol or cellulose acetate, is referred to herein as a "composite". Although the exact mechanism may not be completely understood, it is believed that the combination is not a simple mixture but is a result of chemical and/or physical interactions. It is believed that the interactions lead to a configuration where the starch molecules interact via the amylose with the vinyl alcohol, for example, of the plasticizer molecule to form complexes, involving perhaps chain entanglements. The large individual amylose molecules are believed to be interconnected at several points per molecule with the individual amylopectine molecules as a result of hydrogen bonding (which might otherwise also be in the nature of hydrophilic interactions).

This is considered herein to be beneficial because by varying the content and/or ratios of natural and synthetic components of the starch composite it is believed to be possible to alter the balance between hydrophobic and hydrophilic interactions between the starch components and the plasticizer to allow, for example, the starch composite filler to vary in form from spherical particles to fibrils.

In particular, it is considered herein that adding a polyvinyl alcohol to the starch to form a composite thereof, particularly when the polyvinyl alcohol has a softening point in a range of 90°C to 130°C, can be beneficial to provide resulting starch/plasticizer composite having a softening point in a range of 110°C to 160°C, and thereby provide a starch composite for blending well with a rubber composition during its mixing stage at a temperature, for example, in a range of 110°C to 165°C or 170°C.

Historically, the more homogeneous the dispersion of rubber compound components into the rubber, the better the resultant cured properties of that rubber. It is considered herein that it is a particular feature of this invention that the starch composite mixes with the rubber composition during the rubber mixing under high shear conditions and at a temperature in a range of 140°C to 165°C, in a manner that very good dispersion in the rubber mixture is obtained. This is considered herein to be important because upon mixing the elastomer composition containing the starch/plasticizer composite to a temperature to reach the melting point temperature of the composite, the starch composite will contribute to the development of high shearing forces which is considered to be beneficial to ingredient dispersion within the rubber composition. Above the melting point of the starch composite, for example, around 150°C, it will melt and maximize its reaction with the coupling agent.

In one aspect, such a rubber composition can be provided as being sulfur cured. The sulfur curing is accomplished in a conventional manner, namely, by curing under conditions of elevated temperature and pressure for a suitable period of time.

In the practice of this invention, as hereinbefore pointed out, the rubber composition is comprised of at least one diene-based elastomer, or rubber. Thus, it is considered that the elastomer is a sulfur curable elastomer. The diene based elastomer may be selected from at least one of homopolymers of isoprene and 1,3-butadiene and copolymers of isoprene and/or 1,3-butadiene with a aromatic vinyl compound selected from at least one of styrene and alphamethylstyrene. Accordingly such elastomer, or rubber, may be selected, for example, from at least one of cis 1,4-polyisoprene rubber (natural and/or synthetic, and preferably natural rubber), 3,4-polyisoprene rubber, styrene/butadiene copolymer rubbers, isoprene/butadiene copolymer rubbers, styrene/isoprene copolymer rubbers, styrene/isoprene/butadiene terpolymer rubbers, cis 1,4-polybutadiene rubber and medium to high vinyl polybutadiene rubber having a vinyl 1,2- content in a range of 15 to 85 percent and emulsion polymerization prepared butadiene/acrylonitrile copolymers. Such medium to high vinyl polybutadiene rubber may be more simply referred to herein as a high vinyl polybutadiene.

The rubber composition is preferably of at least two diene based rubbers.

In one aspect, an emulsion polymerization derived styrene/butadiene (E-SBR) might be used having a relatively conventional styrene content of 20 to 30 percent bound styrene or, for some applications, an E-SBR having a medium to relatively high bound styrene content, namely, a bound styrene content of 30 to 45 percent.

The relatively high styrene content of 30 to 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. The bound styrene content can vary, for example, from 5 to 50 percent.

Emulsion polymerization prepared styrene/butadiene/acrylonitrile copolymer rubbers (E-SBAR) containing 2 to 50 weight percent bound acrylonitrile in the terpolymer are also contemplated as diene based rubbers for use in this invention.

The solution polymerization prepared SBR (S-SBR) typically has a bound styrene content in a range of 5 to 50, preferably 9 to 36, percent. Its' butadiene portion may have a vinyl content in a range of 10 to 50 percent. The S-SBR can be conveniently prepared, for example, by organo lithium catalyzation in the presence of an organic hydrocarbon solvent.

A purpose of using S-SBR is to enhance tire rolling resistance since it should tend to promote lower hysteresis for tire tread compositions.

The 3,4-polyisoprene rubber (3,4-PI) is considered beneficial for a purpose of enhancing the tire's traction when it is used in a tire tread composition.

The 3,4-PI and use thereof is more fully described in US-A- 5,087,668.

The cis 1,4-polybutadiene rubber (BR) is considered to be beneficial for a purpose of enhancing the tire tread's wear, or treadwear.

Such BR can be prepared, for example, by organic solution polymerization of 1,3-butadiene.

The BR may be conveniently characterized, for example, by having at least a 90 percent cis 1,4-content.

The cis 1,4-polyisoprene and cis 1,4-polyisoprene natural rubber are well known to those having skill in the rubber art.

The commonly employed siliceous pigments used in rubber compounding applications can be used as the silica in this invention, including pyrogenic and precipitated siliceous pigments (silica), although precipitate silicas are preferred.

The siliceous pigments preferably employed in this invention are precipitated silicas such as, for example, those obtained by the acidification of a soluble silicate, e.g., sodium silicate.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The silica may also be typically characterized by having a dibutylphthalate (DBP) absorption value in a range of 50 to 400, and more usually 100 to 300 cm³/100g.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, Zeosil 1165MP and silicas available from Degussa AG with, for example, designations VN2 and VN3, as well as other grades of silica, particularly precipitated silicas, which can be used for elastomer reinforcement.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins comprise 0.5 to 10 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids which can include stearic acid comprise 0.5 to 3 phr. Typical amounts of zinc oxide comprise 1 to 10 phr. Typical amounts of waxes comprise 1 to 5 phr. Often microcrystalline waxes are used. Typical amounts of peptizers comprise 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4. In another embodiment, combinations of a primary and a secondary accelerator might be used with the secondary accelerator being used in smaller amounts (of 0.05 to 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition is typically done in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, starch composite, and fillers such as carbon black and optional silica and coupler, and/or non-carbon black and non-silica fillers, are mixed in one or more non-productive mix stages.

The invention may be better understood by reference to the following examples in which the parts and percentages are by weight unless otherwise indicated.

### EXAMPLE I

A rubber composition is prepared composed of starch/plasticizer composite, combination of elastomer and resins and identified herein as Sample.

The rubber compositions were prepared in an internal rubber mixer using several mixing stages, namely, one non-productive mix stage, in which ingredients are mixed except for sulfur curative and vulcanization accelerator for about six minutes to a temperature of 160°C, dumped from the mixer, sheeted out and allowed to cool to below 40°C.

The resulting rubber composition is then mixed in a productive mixing stage in an internal rubber mixer in which sulfur curative and accelerator are added for two minutes to a temperature of 120°C.

Mixing rubber composition in sequential non-productive and productive mixing stages is well known to those having skill in such art.

The formulations for Control Samples A and B and for Samples C and D is shown in the following Table 1.

**Table 1**

| | Control | Control | | |
|---|---|---|---|---|
| Material | Sample A | Sample B | Sample C | Sample D |
| Non-Productive Mix Stage (to 160°C) | | | | |
| Natural rubber¹ | 50 | 50 | 50 | 5 |
| Styrene/butadiene rubber² | 50 | 50 | 50 | 50 |
| Carbon black (N220)⁴ | 65 | 58 | 58 | 63 |
| Starch/plasticizer A⁵ | 0 | 6 | 0 | 0 |
| Starch/plasticizer B⁶ | 0 | 0 | 6 | 0 |
| Rubber aromatic processing oil⁷ | 13.5 | 13.5 | 10.0 | 11.5 |
| Zinc oxide | 4 | 3 | 3 | 3 |
| Fatty acid⁸ | 2 | 2 | 2 | 2 |
| Resin(s)⁹ | 1 | 3 | 3 | 3 |
| Antioxidant¹⁰ | 4 | 3. | 4.3 | 4.3 |
| Bis-(3-triethoxysilylpropyl) tetrasulfide¹¹ | 0 | 2.75 | 1.5 | 1.65 |

| Productive Mix Stage (to 120°C) | | | | |
|---|---|---|---|---|
| Sulfur | 1.8 | 1.1 | 1 | 1.05 |
| Accelerator(s)¹² | 1.65 | 1.65 | 1.75 | 1.75 |

| | | | | |
|---|---|---|---|---|
| ¹Cis 1,4-polyisoprene natural rubber | | | | |
| ²Styrene/butadiene copolymer elastomer, emulsion polymerization prepared containing about 23.5 percent styrene obtained as SBR 1721 from the Enichem Company | | | | |
| ³Styrene/butadiene copolymer elastomer, emulsion polymerization prepared, containing about 23.5 percent styrene and containing about 37.5 parts by weight per 100 parts by weight of the elastomer of extender oil obtained as Cariflex S5820 from the Shell Company ⁴N-220 carbon black, an ASTM designation. | | | | |
| ⁵A composite of starch and poly(ethylenevinyl alcohol) plasticizer in a weight ratio of plasticizer to starch of 0.6/1 having a softening point according to ASTM No. D1228 of about 142°C; wherein the starch is composed of amylose units and amylopectin units in a weight ratio of 1/3 and a moisture content of 5 weight percent obtained as Mater Bi 1128R from the Novamont-Montedison Company | | | | |
| ⁶A composite of starch and poly(ethylenevinyl alcohol) plasticizer in a weight ratio of plasticizer to starch of 0.38/1 having a softening point according to ASTM No. D1228 of about 132°C; wherein the starch is composed of amylose units and amylopectin units in a weight ratio of 1/3 and a moisture content of about 5 weight percent obtained as Mater Bi 1128R from the Novamont-Montedison Company | | | | |
| ⁷Of the high aromatic type | | | | |
| ⁸Primarily stearic acid | | | | |
| ⁹Resins as alkyl-phenol-formaldehyde novolak tackifying resin as SP1068 from the Schenectady Company, as an aliphatic and aromatic hydrocarbon resin as Struktol 40MS from the Schill & Seilacher company and as a heat reactive Hydrocarbon resin as NECIRES SF21 0 from the Nevcin Company | | | | |
| ¹⁰Of the mixed aryl-p-phenylenediamines type | | | | |
| ¹¹A coupler as a 50 percent active composite composed of an organosilane tetrasulfide and carbon black in a 50/50 weight ratio available as material X50S from Degussa AG. Technically the organosilane polysulfide is understood to be a composite, or mixture, in which the average polysulfide bridge contains 3.5 to 4 connecting sulfur atoms, although the mixture may contain such polysulfides with a range of from 2 to 8 connecting sulfur atoms. | | | | |
| ¹²N-tert butyl-2-benzothiazyl sulfenamide and diphenyl guanidine in the case of Samples A and B and dicyclohexylamino-benzothiazyl and dibenzothiazyl disulfide in the case of Samples C and D. | | | | |

Various physical properties for rubber Samples of Table 1 are reported in the following Table 2.

**Table 2**

| | Samples | | | |
|---|---|---|---|---|
| | Control | Control | | |
| | Sample A | Sample B | Sample C | Sample D |
| Starch Composite A | 0 | 6 | 0 | 0 |
| Starch Composite B | 0 | 0 | 6 | 0 |
| Coupling agent composite (coupling agent on carbon black) | 0 | 2.75 | 1.50 | 1.65 |

| Stress-Strain, Cure 74 minutes at 160°C | | | | |
|---|---|---|---|---|
| 300 % modulus (ring) (MPa) | 7.7 | 6.9 | 5.4 | 5.4 |
| Ultimate tensile strength (MPa) | 17.2 | 15.9 | 16.4 | 16.0 |
| Ultimate elongation (%) | 563 | 597 | 692 | 667 |
| Specific tear energy¹ (MPa) | 36.5 | 37 | 43 | 40.1 |

| Tear Strength² , Strength Test at 100°C | | | | |
|---|---|---|---|---|
| Peel adhesion to self (N/MM) | 30 | 37 | 44 | 40 |
| Shore A hardness (23°C) | 60.2 | 55.7 | 55.4 | 54.6 |

| Aged Stress-Strain, Cure 74 minutes at 160°C; Aged 3 days in air at 90°C | | | | |
|---|---|---|---|---|
| 300 % modulus (ring) (MPa) | 10.5 | 8.8 | 6.8 | 8.0 |
| Ultimate tensile strength (MPa) | 14 | 14.6 | 15 | 15.8 |
| Ultimate elongation (%) | 403 | 447 | 569 | 530 |
| Specific tear energy¹ (MPa) | 23 | 29 | 36.3 | 35.9 |
| Shore A hardness (23°C) 64.2 | 58.8 | 58.1 | 59.1 | |

| Aged Stress-Strain, Cure 74 minutes at 160°C; Aged 14 days in air at 60°C | | | | |
|---|---|---|---|---|
| 300 % modulus (ring) (MPa) | 9.4 | 8.1 | 6.5 | 6.8 |
| Ultimate tensile strength (MPa) | 16.2 | 15.6 | 16.1 | 16.2 |
| Ultimate elongation (%) | 493 | 545 | 644 | 612 |
| Specific tear energy¹(MPa) | 31 | 34 | 41 | 39 |

| Tear Strength², Strength Test at 100°C | | | | |
|---|---|---|---|---|
| Peel adhesion to self (N/MM) 26 | 36 | 45.7 | 42 | |
| Shore A hardness (23°C) | 63.6 | 59.1 | 58.7 | 57.4 |

| | | | | |
|---|---|---|---|---|
| ¹The Specific Tear Energy is determined by the area under the stress strain curve till break. | | | | |
| ²Tear strength testing was done to determine the interfacial adhesion of a rubber composition (Sample) to itself. The interfacial adhesion was determined by pulling curing one rubber composition Sample against another rubber composition from the same Sample with a Mylar film (with a cut-out window in the Mylar film) placed between the rubber compositions. The tear strength was determined by pulling one cured rubber composition from away from the other at a right angle with the two ends being thereby pulled apart at a 180° angle to each other using an Instron machine. The area of cured contact was formed by placement of a Mylar sheet, with a cut-out window in the Mylar sheet, between the rubber compositions during cure through the window in the Mylar film which allowed the two materials to come into contact with each other during curing. The "tear strength" is sometimes referred to as "peel adhesion". | | | | |

The results reported in Table 2 for Sample C, which contained the starch/plasticizer Composite B with the low plasticizer/starch ratio of 0.38/1 and low coupling agent/Composite ratio, are considered herein to be remarkable.

In particular, Sample C, as compared to Control Sample A, (without the starch/plasticizer Composite), achieved a significant combination of
(A) relatively high ultimate elongation of 692 percent (versus 563 percent for Sample A),
(B) relatively low tensile strength of 16.4 MPa (versus 17.2 MPa for Sample A),
(C) relatively high tear energy of 43 MPa (versus 36.5 MPa for Sample A),
(D) relatively high peel adhesion of 44 N/MM (versus 30 N/MM for Sample A), and
(E) acceptable Shore A hardness (55.1) (versus 62 for Sample A).

The relationship of the combination of relatively low stiffness at high elongation, indicated by ultimate elongation and tensile and the tear energy is also considered herein to be significant for such tractor drive wheel tire tread.

Such results are even more remarkable when taken in view of aging of the Samples in which the properties of Sample C illustrated comparatively significantly less change, namely, for the 14 day aging test:
(A) a reduction in ultimate elongation of only about 7 percent for Sample C versus a reduction of about 12 percent for Control Sample A,
(B) an increase in ultimate tensile strength of only about 2 percent for Sample C versus an increase of about 6 percent for Control Sample A.
(C) a reduction in tear energy of about 5 percent for Sample C versus a reduction of about 15 percent for Control Sample A, and
(D) an increase in tear strength of about 4 percent for Sample C versus a reduction of about 13 percent for Control Sample A.

The significance of the aging phenomenon is readily apparent because it is desired for the tractor drive wheel tire tread to substantially maintain significant physical properties for an acceptable period of working time.

A similar comparative relationship is also seen between Sample C (using the starch/plasticizer composite of low plasticizer/starch ratio) and Sample B (using the starch/plasticizer composite of the significantly higher plasticizer/starch ratio), at least insofar as the tear energy at the more severe aging experience is are concerned, with the results for Sample C seen herein as being significantly superior to those of Sample B.

The above observed comparative differences between Sample C and Control Sample A, particularly upon aging of the respective Samples, is considered herein to be significant for a tractor tire tread with its significantly spaced apart lugs and intended ground-engaging operation.

### EXAMPLE II

These experiments were made to examine the effect of the ratio of the coupling agent, namely the organosilane polysulfide, to the starch/plasticizer composite B, namely the starch/plasticizer composite with the lower plasticizer/starch ratio of 0.28/1.

The formulations are shown in the following Table 3 with the indicated ingredients and mixing process having been previously described in Example I.

The Samples are identified as Control Sample E and Samples F and G. Sample G is similar to Sample C of Example I.

**Table 3**

| | Control | | |
|---|---|---|---|
| Material | Sample E | Sample F | Sample G |
| First Non-Productive Mix Stage (to 160°C) | | | |
| Natural rubber¹ | 50 | 50 | 50 |
| Styrene/butadiene rubber² | 2 | 20 | 20 |
| Styrene/butadiene rubber³ | 41.25 | 41.25 | 41.25 |
| Carbon black (N220)⁴ | 62.5 | 57.5 | 57.5 |
| Starch/plasticizer B⁵ | 0 | 6 | 6 |
| Rubber aromatic processing oil⁷ | 10 | 10 | 10 |
| Zinc oxide | 3 | 3 | 3 |
| Fatty acid⁸ | 2 | 2 | 2 |
| Resin(s)⁹ | 1 | 3 | 3 |
| Antioxidant¹⁰ | 3.3 | 3.3 | 3.3 |
| Bis-(3-triethoxysilylpropyl) tetrasulfide¹¹ | 0 | 2.75 | 1.5 |

| Productive Mix Stage (to 120°C) | | | |
|---|---|---|---|
| Sulfur | 1.0 | 1.0 | 1.0 |
| Accelerator(s)¹² | 1.65 | 1.65 | 1.75 |

| | | | |
|---|---|---|---|
| ¹Cis 1,4-polyisoprene natural rubber | | | |
| ²Styrene/butadiene copolymer elastomer, emulsion polymerization prepared, containing about 23.5 percent styrene obtained as SBR 1721 from the Enichem Company | | | |
| ³Styrene/butadiene copolymer elastomer, emulsion polymerization prepared, containing about 23.5 percent styrene and containing 37.5 parts by weight per 100 parts by weight of the elastomer of an extender oil obtained as Cariflex S5820 from the Shell Company | | | |
| ⁴N-220 carbon black, an ASTM designation | | | |
| ⁵ A composite of starch and poly(ethylenevinyl alcohol) plasticizer in a weight ratio of about plasticizer to starch of 0.38/1 having a softening point according to ASTM No. D1228 of about 132°C; wherein the starch is composed of amylose units and amylopectin units in a weight ratio of 1/3 and a moisture content of 5 weight percent obtained as Mater Bi 1128R from the Novamont - Montedison Company | | | |
| ⁷Of the low aromatic type | | | |
| ⁸Primarily stearic acid | | | |
| ⁹Resins as alkyl-phenol-formaldehyde novolak tackifying resin as SP1068 from the Schenectady company, as an aliphatic and aromatic hydrocarbon resin as Struktol 40MS from the Schill & Seilacher Company and as a heat reactive hydrocarbon resin as NECIRES SF210 from the Nevcin Company | | | |
| ¹⁰Of the mixed aryl-p-phenylenediamines type | | | |
| ¹¹A coupler as a 50 percent active composite composed of an organosilane tetrasulfide and carbon black in a 50/50 weight ratio available as material X50S from Degussa AG. Technically the organosilane polysulfide is understood to be a composite, or mixture, in which the average polysulfide bridge contains 3.5 to 4 connecting sulfur atoms, although the mixture may contain such polysulfides with a range of from 2 to 8 connecting sulfur atoms. | | | |
| ¹² N-tert butyl-2-benzothiazyl sulfenamide and diphenyl guanidine | | | |

Various physical properties for rubber Samples of Table 3 are reported in the following Table 4.

**Table 4**

| | Samples | | |
|---|---|---|---|
| | Control | | |
| | Sample E | Sample F | Sample G |
| Starch Composite B | 0 | 6 | 6 |
| Coupling agent composite (coupling agent on carbon black) | 2.5 | 2.5 | 1.5 |

| Stress-Strain (23°C), Cure 74 minutes at 160°C | | | |
|---|---|---|---|
| 100% modulus (ring) (MPa) | 1.3 | 1.2 | 1.2 |
| 300% modulus (ring) (MPa) | 6.4 | 5.9 | 5.5 |
| Ultimate tensile strength (MPa) | 16.9 | 16.1 | 16.3 |
| Ultimate elongation (%) | 628 | 648 | 664 |
| Shore A hardness (23°C) | 56.1 | 56.7 | 55.1 |
| Zwick Rebound (23°C) | 36.6 | 36.6 | 37.1 |
| Zwick Rebound (100°C) | 49.6 | 48.6 | 48.8 |
| Tear Strength, Strength Test at 100°C | | | |
| Peel adhesion to self (N/MM) | 39.1 | 41.9 | 41.3 |

| Aged Stress-Strain (23°C), Cure 74 minutes at 160°C; Aged 3 days in air at 90°C | | | |
|---|---|---|---|
| 100% modulus (ring) (MPa) | 1.7 | 1.7 | 1.6 |
| 300% modulus (ring) (MPa) | 7.9 | 7.3 | 6.9 |
| Ultimate tensile strength (MPa) | 15.3 | 14.7 | 14.6 |
| Ultimate elongation (%) | 557 | 583 | 603 |
| Shore A hardness (23°C) | 62 | 60.5 | 60.1 |

| Aged Stress-Strain (23°C), Cure 74 minutes at 160°C; Aged 14 days in air at 60°C | | | |
|---|---|---|---|
| 100% modulus (ring) (MPa) | 1.7 | 1.6 | 1.5 |
| 300% modulus (ring) (MPa) | 7.9 | 7.2 | 6.8 |
| Ultimate tensile strength (MPa) | 16.4 | 16.3 | 15.4 |
| Ultimate elongation (%) | 574 | 607 | 602 |
| Shore A hardness (23°C) | 62.3 | 59.4 | 61.1 |

| Tear Strength, Strength Test at 100°C | | | |
|---|---|---|---|
| Peel adhesion to self (N/MM) | 33.4 | 30.2 | 37.1 |

It can be seen from Table 4 the level of coupling agent were adjusted in Samples F and G to provide rubber compositions with an unaged Shore A hardness (23°C) similar to the Control Sample E with its Shore A value of 56.1. For example, Sample F exhibited a Shore A value of 56.7 which was similar to that of Control Sample E and Sample G exhibited a Shore A value of 55.1 which is slightly lower that that of Control Sample E.

Therefore, insofar as such rubber hardness is concerned, the Shore A hardnesses for Samples F and G were similar to Control Sample E.

However, it is readily seen lower 300 percent modulus values were obtained for Samples F (value of 59 MPa) and G (value of 55 MPa), as compared to Control Sample E (value of 64 MPa). It is recognized that the 300 percent modulus represents the stress at an elongation of 300 percent.

It is to be appreciated that the lower 300 percent modulus values for the Samples were observed while obtaining significantly higher ultimate elongations for the Sample F (value of 648 percent) and Sample G (value of 664 percent) as compared to Control Sample E (value of 628 percent), combined with comparable ultimate tensile at break.

This indicates that a significant stiffness (Shore A hardness values) can be obtained for the Samples while having suitable ultimate tensile strengths at relatively high ultimate elongations.

This is considered herein to be important for farm tractor drive tires having significantly spaced apart lugs with the intended ground engaging application because the lug stiffness provides tire handling stability and transmission of force (torque) to the ground, lug softness to dissipate tear energy and resistance to breaking under locally high deformations, namely elongations.

## Claims

1. A farm tire, especially a farm tractor driven tire, with a circumferential tread configuration comprising spaced apart raised lugs primarily in a form of elongated bars extending substantially diagonally across at least a portion of the tread with an average lug outer running surface width to lug length of a ratio of from 1/10 to 1/3, and average individual lug radial heights greater than the associated individual lug running surface, wherein said tread has a net-to-gross value in a range of from 15 to 22 percent, **characterized in that** said farm tire tread comprises a rubber composition comprised of, based upon parts by weight per 100 parts by weight rubber (phr):
(A) 100 parts by weight of at least one conjugated diene-based elastomer,
(B) 25 to 120 phr of at least one elastomer reinforcing filler composed of
(1) 25 to 120 phr of a starch/plasticizer composite, or
(2) 1 to 20 phr of starch/synthetic plasticizer composite, and, correspondingly 5 to 119 phr of rubber reinforcing carbon black;
wherein said starch has a softening point according to ASTM No. D1228 in a range of 180°C to 220°C and wherein said starch/plasticizer composite has a softening point in a range of 110°C to 170°C according to ASTM No. D1228, and has a plasticizer/starch weight ratio in a range of from 0.1/1 to 0.6/1; and
(C) optionally a coupling agent for said starch/plasticizer composite having a moiety reactive with hydroxyl groups contained on said starch/plasticizer composite and another moiety interactive with said diene-based elastomer(s).

2. The tire of claim 1, wherein said rubber composition for said tire tread contains a coupling agent as
(A) bis(3-triethoxysilylpropyl) polysulfide having an average of from 2 to 4 connecting sulfur atoms in its polysulfidic bridge, wherein the weight ratio of said coupling agent to said plasticizer/starch composite is in a range of from 0.05/1 to 0.3/1, or
(B) an organomercapto alkoxysilane having its mercapto moiety blocked wherein its blocked mercapto moiety is capable of being deblocked upon heating to a temperature within a range of 140°C to 160°C.

3. The tire of claim 2, wherein said coupling agent is bis(3-triethoxysilylpropyl) polysulfide having an average of 2 to 2.6 connecting sulfur atoms in its polysulfidic bridge or mercaptopropyl triethoxysilane.

4. The tire of any of the preceding claims, wherein said rubber composition for said tire additionally contains from 10 to 40 phr of amorphous, precipitated silica.

5. The tire of at least one of the preceding claims, wherein said tread rubber is comprised of:
(A) 100 parts by weight of at least one conjugated diene-based elastomer,
(B) 25 to 120 phr of elastomer reinforcing filler composed of 1 to 20 phr of starch/synthetic plasticizer composite, and, correspondingly 5 to 119 phr of rubber reinforcing carbon black; and
(C) a coupling agent for said starch/plasticizer composite.

6. The tire of at least one of the preceding claims, wherein said tire tread rubber composition contains from 2 to 20 phr of at least one additional reinforcing filler and/or non-reinforcing filler selected from at least one of vulcanized rubber particles, short fibers, kaolin clay, mica, talc, titanium dioxide and limestone.

7. The tire of claim 6, wherein said short fibers are contained in said tread rubber composition in an amount of from 2 to 5 phr and are selected from fibers of at least one of nylon, aramid, polyester and cellulose material.

8. The tire of at least one of the preceding claims, wherein for said tread rubber composition, said plasticizer is a liquid at 23°C and/or is selected from at least one of poly(ethylenevinyl alcohol), cellulose acetate and plasticizers based, at least in part, upon diesters of dibasic organic acids and forms said starch/plasticizer composite having a softening point in a range of 110°C to 160°C.

9. The tire of at least one of the preceding claims, wherein for said tread rubber composition, said plasticizer has a softening point of less than the said starch and less than 160°C and/or is selected from at least one of poly(ethylenevinyl alcohol), cellulose acetate and copolymers, and hydrolyzed copolymers, of ethylene-vinyl acetate copolymers having a vinyl acetate molar content of from 5 to 90 percent, ethylene-glycidal acrylate copolymers and ethylene-maleic anhydride copolymers.

10. The tire of at least one of the preceding claims, wherein for said tread rubber composition, the diene based elastomer is selected from at least one of cis 1,4-polyisoprene rubber, 3,4-polyisoprene rubber, styrene/butadiene copolymer rubbers, isoprene/butadiene rubber, styrene/isoprene/butadiene terpolymer rubbers, cis 1,4-polybutadiene rubber, medium vinyl polybutadiene rubber, high vinyl polybutadiene rubber having a vinyl content in a range of 15 to 85 percent and emulsion polymerization prepared styrene/butadiene/acrylonitrile terpolymer rubber and butadiene/acrylonitrile copolymer rubber.

## Patentansprüche

1. Landwirtschaftlicher Reifen, insbesondere ein angetriebener Reifen für einen landwirtschaftlichen Traktor, mit einer umfangsgerichteten Laufflächenkonfiguration, die voneinander beabstandete erhabene Stollen in erster Linie in Form länglicher Barren umfasst, die sich im Wesentlichen diagonal über mindestens einen Teil der Lauffläche erstrecken, mit einer durchschnittlichen Breite der äußeren Laufoberfläche eines Stollens zur Stollenlänge in einem Verhältnis von 1 :10 bis 1 :3, und mit durchschnittlichen radialen Höhen einzelner Stollen, die größer sind als die zugehörige Laufoberfläche einzelner Stollen, wobei diese Lauffläche einen Netto-Brutto-Wert in einem Bereich von 15 bis 22 Prozent aufweist, **dadurch gekennzeichnet, dass** die Lauffläche des landwirtschaftlichen Reifens eine Kautschukzusammensetzung umfasst, aufweisend, auf Basis von Gewichtsteilen pro 100 Gewichtsteile Kautschuk (ThK)
(A) 100 Gewichtsteile mindestens eines Elastomers auf Basis konjugierten Diens,
(B) 25 bis 120 ThK mindestens eines Elastomer-Verstärkungsfüllstoffs, bestehend aus
(1) 25 bis 120 ThK eines Stärke-Weichmacher-Komposits, oder
(2) 1 bis 20 ThK Komposit aus Stärke und synthetischem Weichmacher, und entsprechend 5 bis 119 ThK Kautschukverstärkungs-Carbon Black
wobei besagte Stärke einen Erweichungspunkt nach ASTM Nr. D1228 in einem Bereich von 180 °C bis 220 °C hat und wobei das Stärke-Weichmacher-Komposit einen Erweichungspunkt in einem Bereich von 110 °C bis 170 °C nach ASTM Nr. D1228 hat und ein Gewichtsverhältnis von Weichmacher zu Stärke in einem Bereich von 0,1 :1 bis 0,6 :1 hat ; und
(C) wahlweise einem Kopplungsmittel für das Stärke-Weichmacher-Komposit, das einen Anteil aufweist, der mit an dem Stärke-Weichmacher-Komposit enthaltenen Hydroxylgruppen reaktiv ist, und einen anderen Anteil, der mit dem bzw. den dienbasierten Elastomer(en) in Wechselwirkung tritt.

2. Reifen nach Anspruch 1, wobei die Kautschukzusammensetzung für die Reifenlauffläche ein Kopplungsmittel enthält als
(A) Bis(3-triethoxysilylpropyl)polysulfid mit einem Durchschnitt von 2 bis 4 verbindenden Schwefelatomen in seiner Polysulfidbrücke, wobei das Gewichtsverhältnis des Kopplungsmittels zu dem Weichmacher-Stärke-Komposit in einem Bereich von 0,05 :1 bis 0,3 :1 liegt, oder
(B) ein Organomercaptoalkoxysilan, dessen Mercaptoanteil blockiert ist, wobei der blockierte Mercaptoanteil in der Lage ist, bei Erhitzen auf eine Temperatur in einem Bereich von 140 °C bis 160 °C deblockiert zu werden.

3. Reifen nach Anspruch 2, wobei das Kopplungsmittel Bis(3-triethoxysilylpropyl)polysulfid mit einem Durchschnitt von 2 bis 2,6 verbindenden Schwefelatomen in seiner Polysulfidbrücke oder Mercaptopropyltriethoxysilan ist.

4. Reifen nach einem der vorhergehenden Ansprüche, wobei die Kautschukzusammensetzung für besagten Reifen zusätzlich 10 bis 40 ThK amorphes, ausgefälltes Silika enthält.

5. Reifen nach mindestens einem der vorhergehenden Ansprüche, wobei der Laufflächenkautschuk besteht aus :
(A) 100 Gewichtsteilen mindestens eines Elastomers auf Basis konjugierten Diens,
(B) 25 bis 120 ThK Elastomerverstärkungsfüllstoff, bestehend aus 1 bis 20 ThK von aus Stärke und synthetischem Weichmacher bestehendem Komposit, und entsprechend 5 bis 119 ThK Kautschukverstärkungs-Carbon Black ; und
(C) einem Kopplungsmittel für das Stärke-Weichmacher-Komposit.

6. Reifen nach mindestens einem der vorhergehenden Ansprüche, wobei die Reifenlaufflächen-Kautschukzusammensetzung 2 bis 20 ThK mindestens eines zusätzlichen Verstärkungsfüllstoffs und/oder nichtverstärkenden Füllstoffs enthält, ausgewählt aus mindestens einem von vulkanisierten Gummiteilchen, Kurzfasern, Kaolinton, Glimmer, Talk, Titandioxid und Kalkstein.

7. Reifen nach Anspruch 6, wobei die Kurzfasern in der Laufflächen-Kautschukzusammensetzung in einer Menge von 2 bis 5 ThK enthalten sind und aus Fasern aus mindestens einem von Nylon-, Aramid-, Polyester- und Cellulosematerial ausgewählt sind.

8. Reifen nach mindestens einem der vorhergehenden Ansprüche, wobei für die Laufflächen-Kautschukzusammensetzung der Weichmacher bei 23 °C flüssig ist und/oder aus mindestens einem von Poly(ethylenvinylalkohol), Celluloseacetat und Weichmachern ausgewählt ist, die zumindest teilweise auf Diestern zweiwertiger organischer Säuren basiert sind, und das Stärke-Weichmacher-Komposit bildet, das einen Erweichungspunkt in einem Bereich von 110 °C bis 160 °C aufweist.

9. Reifen nach mindestens einem der vorhergehenden Ansprüche, wobei für die Laufflächen-Kautschukzusammensetzung der Weichmacher einen Erweichungspunkt von weniger als der der Stärke und weniger als 160 °C aufweist und/oder aus mindestens einem von Poly(ethylenvinylalkohol), Celluloseacetat und Copolymeren, und hydrolysierten Copolymeren, von Ethylen-Vinylacetat-Copolymeren mit einem Vinylacetat-Molgehalt von 5 bis 90 Prozent, Ethylen-Glycidalacrylat-Copolymeren und Ethylen-Maleinsäureanhydrid-Copolymeren ausgewählt ist.

10. Reifen nach mindestens einem der vorhergehenden Ansprüche, wobei für die Laufflächen-Kautschukzusammensetzung das dienbasierte Elastomer aus mindestens einem von cis-1,4-Polyisoprenkautschuk, 3,4-Polyisoprenkautschuk, Styrol-Butadien-Copolymerkautschuken, Isopren-Butadien-Kautschuk, Styrol-Isopren-Butadien-Terpolymerkautschuken, cis-1,4-Polybutadienkautschuk, Polybutadienkautschuk mit mittlerem Vinylgehalt, hoch-vinylhaltigem Polybutadienkautschuk mit einem Vinylgehalt in einem Bereich von 15 bis 85 Prozent, und durch Emulsionspolymerisation hergestelltem Styrol-Butadien-Acrylnitril-Terpolymerkautschuk und Butadien-Acrylnitril-Copolymerkautschuk ausgewählt ist.

## Revendications

1. Bandage pneumatique agricole, en particulier bandage pneumatique pour roue motrice de tracteur agricole possédant une configuration de bande de roulement circonférentielle comprenant des barrettes proéminentes espacées les unes des autres sous la forme de barres allongées s'étendant essentiellement en direction diagonale sur au moins une portion de la bande de roulement avec un rapport de la largeur de surface de roulement externe moyenne de la barrette à la longueur de la barrette dans la plage de 1/10 à 1/3, et des hauteurs radiales moyennes des barrettes individuelles qui sont supérieures à la surface de roulement des barrettes individuelles, ladite bande de roulement possédant un rapport net à brut dans la plage de 15 à 22 %, **caractérisé en ce que** ladite bande de roulement d'un bandage pneumatique agricole comprend une composition de caoutchouc comprenant, en se basant sur des parties en poids par 100 parties en poids de caoutchouc (phr) :
(A) à concurrence de 100 parties en poids, au moins un élastomère conjugué à base diénique,
(B) à concurrence de 25 à 120 phr, au moins une matière de charge pour le renforcement de l'élastomère composée de
(1) à concurrence de 25 à 120 phr, un composite d'amidon/plastifiant ou
(2) à concurrence de 1 à 20 phr, un composite d'amidon/plastifiant synthétique, et, de manière correspondante, à concurrence de 5 à 119 phr de noir de carbone pour le renforcement du caoutchouc ;
ledit amidon possédant un point de ramollissement conformément à la norme ASTM D 1228 dans la plage de 180 °C à 220 °C et ledit composite amidon/plastifiant possédant un point de ramollissement dans la plage de 110 °C à 170 °C, conformément à la norme ASTM D 1128, et possédant un rapport pondéral plastifiant/amidon dans la plage de 0,1/1 à 0,6/1 ; et
(C) le cas échéant, un agent de couplage pour ledit composite amidon/plastifiant, possédant une fraction apte à réagir avec des groupes hydroxyle contenus sur ledit composite amidon/plastifiant et une autre fraction apte à entrer en interaction avec ledit/lesdits élastomères à base diénique.

2. Bandage pneumatique selon la revendication 1, dans lequel ladite composition de caoutchouc pour ladite bande de roulement de bandage pneumatique contient, à titre d'agent de couplage
(A) du bis (3-triéthoxysilylpropyl) polysulfure possédant en moyenne de 2 à 4 atomes de soufre de liaison dans son pont polysulfure, le rapport pondéral dudit agent de couplage audit composite plastifiant/amidon se situant dans la plage de 0,05/1 à 0,3/1 ; ou
(B) un organomercapto alcoxysilane dont la fraction mercapto est bloquée, la fraction mercapto bloquée pouvant être débloquée par chauffage à une température dans la plage de 140 °C à 160 °C.

3. Bandage pneumatique selon la revendication 2, dans lequel ledit agent de couplage est un bis(3-triéthoxysilylpropyl) polysulfure possédant en moyenne de 2 à 4 atomes de soufre de liaison dans son pont polysulfure ou un mercaptopropyl triéthoxysilane.

4. Bandage pneumatique selon l'une quelconque des revendications précédentes, dans lequel ladite composition de caoutchouc pour ledit bandage pneumatique contient en outre de la silice amorphe précipitée à concurrence de 10 à 40 phr.

5. Bandage pneumatique selon au moins une des revendications précédentes, dans lequel ledit caoutchouc de bande de roulement comprend :
(A) à concurrence de 100 parties en poids, au moins un élastomère conjugué à base diénique ;
(B) à concurrence de 25 à 120 phr, une matière de charge pour le renforcement de l'élastomère composé, à concurrence de 1 à 20 phr, d'un composite d'amidon/plastifiant synthétique et de manière correspondante, à concurrence 5 à 119 phr, de noir de carbone pour le renforcement du caoutchouc ; et
(C) un agent de couplage pour ledit composite amidon/plastifiant.

6. Bandage pneumatique selon au moins une des revendications précédentes, dans lequel ladite composition de caoutchouc de bande de roulement du bandage pneumatique contient, à concurrence de 2 à 20 phr, au moins une matière de charge supplémentaire faisant office de renforcement et/ou une matière de charge exempte de renforcement, qui représente au moins un membre choisi parmi le groupe comprenant des particules de caoutchouc vulcanisé, des courtes fibres, de l'argile kaolinique, du mica, du talc, du dioxyde de titane et du carbonate de calcium.

7. Bandage pneumatique selon la revendication 6, dans lequel lesdites courtes fibres sont contenues dans ladite composition de caoutchouc en une quantité de 2 à 5 phr et représentent au moins un type de fibre choisi parmi le groupe comprenant des fibres de nylon, des fibres d'aramide, des fibres de polyester et des fibres de cellulose.

8. Bandage pneumatique selon au moins une des revendications précédentes, dans lequel, pour ladite composition de caoutchouc, ledit plastifiant est un liquide à 23 °C et/ou représente au moins un membre choisi parmi le groupe comprenant un polymère d'éthylène/alcool vinylique, de l'acétate de cellulose et des plastifiants basés au moins en partie sur des diesters d'acides organiques dibasiques et des formes dudit composite amidon/plastifiant possédant un point de ramollissement dans la plage de 110 °C à 160 °C.

9. Bandage pneumatique selon au moins une des revendications précédentes, dans lequel, pour ladite composition de caoutchouc, ledit plastifiant possède un point de ramollissement qui est inférieur à celui dudit amidon et inférieur à 160 °C et/ou représente au moins un membre choisi parmi le groupe comprenant un polymère d'éthylène/alcool vinylique, de l'acétate de cellulose et des copolymères, et des copolymères hydrolysés, des copolymères d'éthylène/acétate de vinyle possédant une teneur molaire en acétate de vinyle de 5 à 90 %, des copolymères d'éthylène/acrylate de glycidal et des copolymères d'éthylène/anhydride maléique.

10. Bandage pneumatique selon au moins une des revendications précédentes, dans lequel, pour ladite composition de caoutchouc, l'élastomère à base diénique représente au moins un membre choisi parmi le groupe comprenant du caoutchouc de cis 1,4-polyisoprène, du caoutchouc de 3,4-polyisoprène, des caoutchoucs de copolymères de styrène/butadiène, du caoutchouc isoprène/butadiène, des caoutchoucs de terpolymère de styrène/isoprène/butadiène, du caoutchouc de cis 1,4-polybutadiène, du caoutchouc de polybutadiène possédant une teneur moyenne en groupes vinyle, du caoutchouc de polybutadiène à haute teneur en groupes vinyle possédant une teneur en groupes vinyle dans la plage de 15 à 85 % et un caoutchouc de terpolymère de styrène/butadiène/acrylonitrile préparé par polymérisation en émulsion, et un caoutchouc de copolymère de butadiène/acrylonitrile.
